Europäisches Patentamt

European Patent Office

Office européen des brevets

(19)

(11) Veröffentlichungsnummer: **0 238 975**
B1

(12) EUROPÄISCHE PATENTSCHRIFT

(45) Veröffentlichungstag der Patentschrift:
10.01.90

(51) Int. Cl.⁴: **C 02 F 1/72**, C 02 F 1/46,
C 25 B 1/30

(21) Anmeldenummer: **87103842.8**

(22) Anmeldetag: **17.03.87**

(54) **Verfahren zur Aktivierung von Wasserstoffperoxid zur Oxidationsbehandlung von schwer abbaubaren toxischen Substanzen.**

(30) Priorität: 25.03.86 DE 3610061

(43) Veröffentlichungstag der Anmeldung:
30.09.87 Patentblatt 87/40

(45) Bekanntmachung des Hinweises auf die Patenterteilung:
10.01.90 Patentblatt 90/2

(84) Benannte Vertragsstaaten:
BE DE FR GB IT NL

(56) Entgegenhaltungen:
CH-A- 605 421
DE-A- 2 927 912
GB-A- 1 399 213
US-A- 4 350 575

Die Akte enthält technische Angaben, die nach dem
Eingang der Anmeldung eingereicht wurden und die
nicht in dieser Patentschrift enthalten sind.

(73) Patentinhaber: Peroxid-Chemie GmbH,
Dr.-Gustav-Adolph-Strasse 2, D-8023 Höllriegelskreuth
bei München (DE)

(72) Erfinder: Wabner, Dietrich, Dr., Danziger Strasse 62,
D-8046 Garching (DE)

(74) Vertreter: Huber, Bernhard, Dipl.-Chem. et al,
Patentanwälte H. Weickmann, Dr. K. Fincke F.A.
Weickmann, B. Huber Dr. H. Liska, Dr. J. Prechtel
Möhlstrasse 22 Postfach 860 820,
D-8000 München 86 (DE)

# Beschreibung

Die Anwendung von Wasserstoffperoxid als Oxidationsmittel ist allgemein bekannt. So kann Wasserstoffperoxid z.B. zur Oxidation von organischen Substanzen in Lösung dienen, zur Synthese organischer Verbindungen, zur Oxidation von Alkoholen und Aldehyden, usw. Neben dem Bleichen gewinnen die Verwendung in der chemischen Industrie und insbesondere auch der Bereich des Umweltschutzes zunehmend an Bedeutung. Besonders auf dem Gebiet des Umweltschutzes kommt für das Wasserstoffperoxid der große Vorteil zum Tragen, daß bei der Umsetzung des Wasserstoffperoxids als Abbauprodukt reines Wasser anfällt. Ein Hauptanwendungsgebiet für Wasserstoffperoxid liegt deshalb auch in der Abwasserreinigung [(vgl. z.B. H. Schwarzer, Chemie-Technik 8 (1979), 67 - 70 und 283 - 286; H. Overath, NATO Techn. Bericht CCMS-111 (1979) 544].

Es ist auch bekannt, zur Steigerung der Oxidationswirkung von Wasserstoffperoxid das Wasserstoffperoxid unter Bildung von Hydroxylradikalen (OH$^\bullet$) zu aktivieren; das Hydroxylradikal ist eines der stärksten chemischen Oxidationsmittel.

Ein unter Bildung von OH$^\bullet$ verlaufendes Verfahren ist z.B. die Oxidation mit dem Fenton-Reagens, das ein Gemisch aus Wasserstoffperoxid und Eisen (II)-Salzen darstellt [vgl. z.B. H.J.H. Fenton, J. Chem. Soc. 65 (1984), 899 - 910; W. Feuerstein et al, Vom Wasser 56 (1981), 35 - 54]. Die Oxidation mit dem Fenton-Reagens wird deshalb auch zur Abwasserreinigung verwendet. Abgesehen von den relativ hohen Kosten des Fenton-Reagens, die gegenüber der oftmals bestehenden Dringlichkeit z.B. beim Abbau von Deponie-Sickerwässern, von hochtoxischen, biologisch nicht abbaubaren Prozeßabwässern der chemischen Industrie usw. in ihrer Bedeutung zwar zurücktreten, bleibt bei der chemischen Aktivierung von Wasserstoffperoxid aber ein wesentlicher Nachteil bestehen, weil durch die Verwendung von Eisen(II)-Ionen zusätzliche Metalloxid/Metallhydroxid-Schlämme anfallen, die speziell deponiert werden müssen, weil bei ihnen z.B. die Gefahr einer Wiederauflösung durch sauren Regen besteht. Der mit der Verwendung von Wasserstoffperoxid verbundene Vorteil, daß bei der Umsetzung des Wasserstoffperoxids als Abbauprodukt reines Wasser anfällt, wird durch die Verwendung chemischer Aktivierungsmittel also wieder weitgehend eingeschränkt, und eine allgemein anwendbare Verwendung von chemisch aktiviertem Wasserstoffperoxid zur Abwasserreinigung konnte sich aufgrund der sich mit dem anfallenden Metallhydroxidschlamm ergebenden Deponieprobleme deshalb nicht durchsetzen.

Aus der CH-PS 605 421 ist bereits ein Verfahren zur Desinfektion von Bade-, Trink- und Industriewasser mit H$_2$O$_2$ bekannt, bei welchem zur Katalyse der H$_2$O$_2$-Zersetzung katalytisch wirkende Metalle, Metallionen oder Metallverbindungen, organische Stoffe wie z.B. Aldehyde oder eine Stromquelle verwendet werden. Soweit dabei die Katalyse mit einer Stromquelle angewendet wird, kommen Kupferelektroden zusammen mit H$_2$O$_2$-Mengen zwischen 0 und 10 mg/l zur Anwendung bei bakterienhaltigem Wasser. Unter diesen Bedingungen geht Kupfer in Lösung, und man erzeugt Metalloxid/Metallhydroxid-Schlämme, die gerade eben vermieden werden sollen.

Aufgabe der vorliegenden Erfindung ist deshalb die Bereitstellung eines Verfahrens zur Überführung von schwer abbaubaren oder toxischen Substanzen mittels H$_2$O$_2$ in biologisch abbaubare oder abgebaute Substanzen, das die mit den bisher bekannten Verfahren verbundenen Nachteile vermeidet und eine allgemeine, insbesondere zur Abwasserreinigung geeignete Anwendung ermöglicht. Diese Aufgabe wird mit der vorliegenden Erfindung gelöst.

Gelöst wird diese Aufgabe erfindungsgemäß durch ein Verfahren zur Überführung von schwer abbaubaren oder toxischen Substanzen in wäßrigen Medien mittels H$_2$O in biologisch abgebaute bzw. abbaubare Substanzen, das dadurch gekennzeichnet ist, daß man das wäßrige Medium mit 0,5 bis 10 mg H$_2$O$_2$/l pro CSB-Einheit versetzt und einem Gleichstrom mit einer Stromdichte von 0,5 bis 50 mA/cm$^2$ aussetzt unter Anwendung von Elektroden, die unter den Verfahrensbedingungen nicht in Lösung gehen.

Zweckmäßige Ausführungsformen dieses Verfahrens sind Gegenstand der Ansprüche 2 bis 8.

Mit dem erfindungsgemäßen Verfahren wird die bei der chemischen Aktivierung von Wasserstoffperoxid erforderliche Verwendung von Chemikalien und die damit verbundenen Nachteile vermieden. Die Aktivierung des Wasserstoffperoxids erfolgt nach dem Prinzip der äußeren Elektrolyse, also über geeignete Elektroden, unter Bildung von sauerstoffhaltigen reaktiven Produkten.

Ein weiterer Vorteil dieses Verfahrens besteht dabei auch darin, daß die Zufuhr der Elektronen, also die Aktivierung des Wasserstoffperoxids, auf einfache Weise gleich am für die Wasserstoffperoxid-Behandlung vorgesehenen Ort, also z.B. im gleichen Reaktionsgefäß oder mit in das zu reinigende Abwasser tauchenden Elektroden, erfolgen kann. Dadurch wird eine kostengünstige Zeiteinsparung erreicht, ein für Zuführungs- oder Transportzwecke erforderlicher apparativer Aufwand wird vermieden, und das aktivierte Wasserstoffperoxid kann ohne zeitlich bedingte Aktivitätsminderung zur Wirkung kommen.

Das das Wasserstoffperoxid enthaltende wäßrige Medium ist vorzugsweise eine wäßrige Lösung von Wasserstoffperoxid.

Die Konzentration des verwendeten Wasserstoffperoxids richtet sich insbesondere nach dem CSB-Wert (CSB = chemischer Sauerstoffbedarf). In der Regel können im erfindungsgemäßen Verfahren alle gebräuchlichen und handelsüblichen wäßrigen Wasserstoffperoxidlösungen eingesetzt werden also insbesondere 3 bis 30 Gew.-%ige Wasserstoffperoxidlösungen, aber auch solche mit geringeren oder höheren Wasserstoffperoxid-Konzentrationen.

In der Regel wird die Reaktionsgeschwindigkeit proportional zur Wasserstoffperoxid-Menge gesteigert. Vorzugsweise werden 2 bis 3 mg Wasserstoffperoxid/Liter pro CSB-Einheit (mg/l) verwendet, wobei aber auch höhere und niedrigere Wasserstoffperoxid-Konzentrationen verwendet werden können;

unter Berücksichtigung wirtschaftlicher Gesichtspunkte (möglichst geringe Wasserstoffperoxid-Konzentration bei einer vertretbaren Rekationsgeschwindigkeit) sollte die Wasserstoffperoxid-Konzentration aber im Bereich zwischen 0,5 mg/l und 100 mg/l pro CSB Einheit liegen. Der pH-Wert des wäßrigen Mediums ist nicht kritisch und kann in der Regel in einem weiten pH-Bereich, von stark alkalisch (pH = 14) bis stark sauer (pH = 0) liegen. Die Auswahl zweckmäßiger und bevorzugter pH-Bereiche richtet sich insbesondere nach dem beabsichtigten Verwendungszweck und der Reaktionsdauer.

Die Oxidation, z.B. die oxidative Reinigung von Abwässern, verläuft im allgemeinen bei pH-Werten < 8 rascher; mit dem erfindungsgemäßen Verfahren kann aber auch bei alkalischen pH-Werten gearbeitet werden; bei einer Oxidation mit Fenton-Reagens mußten die Abwässer hingegen aufgrund der dann ausfallenden Metallhydroxide zuerst in den sauren pH-Bereich gebracht werden. Obwohl in der Regel ein pH-Wert < 8, insbesondere < 7, bevorzugt ist, kann es in einigen Fällen, insbesondere bei der Abwasserbehandlung, deshalb auch zweckmäßig sein, bei höheren pH-Werten zu arbeiten.

Der zur Aktivierung des Wasserstoffperoxids verwendete Gleichstrom sollte in der Regel mit einer Stromdichte nicht unter 0,5 mA/cm$^2$ angewendet werden. Darunter liegende Stromdichten führen meist zu einem insbesondere hinsichtlich der Reaktionsgeschwindigkeit, z.B. der Abbaugeschwindigkeit von Abwasserverunreinigungen, unter praktischen Gesichtspunkten nicht mehr befriedigenden Verfahrensablauf. Durch eine Steigerung der Stromdichte wird die Reaktionsgeschwindigkeit in der Regel proportional gesteigert, d.h., daß z.B. einer Verdoppelung der Stromdichte etwa eine doppelt so hohe Reaktionsgeschwindigkeit entspricht. Oberhalb einer Stromdichte von ca. 30 mA/cm$^2$ nimmt die mit einer Steigerung der Stromdichte einhergehende Verfahrensverbesserung, insbesondere hinsichtlich der Reaktionsgeschwindigkeit, zunehmend ab, und oberhalb einer Stromdichte von ca. 50 mA/cm$^2$ wird mit steigendem Stromverbrauch kaum noch eine Verfahrensverbesserung erreicht. Unter wirtschaftlichen Gesichtspunkten sind deshalb Stromdichten über 50 mA/cm$^2$ nicht mehr zweckmäßig. Bevorzugt wird der Bereich von 10 bis 30 mA/cm$^2$. Es wird angenommen, daß bei den erfindungsgemäß angewendeten Stromdichten eine induzierte gekoppelte Reaktion oder eine Kettenreaktion ausgelöst wird. Wie die übrigen Verfahrensparameter, z.B. Wasserstoffperoxid-Konzentration, pH-Wert, aber auch Verfahrenstemperatur, Verweilzeit, Material, Form und Aufbau der Elektroden und Elektrolysezellen, richten sich die zweckmäßigsten Werte oder Ausführungsformen einzelner Verfahrensparameter aber insbesondere auch nach dem beabsichtigten Verwendungszweck und nach den übrigen Verfahrensbedingungen.

Die Verfahrenstemperatur ist nicht kritisch; im allgemeinen beeinflußt die Temperatur den Verfahrensablauf nach der bekannten Regel, wonach eine Temperatursteigerung eine Steigerung der Reaktionsgeschwindigkeit hervorruft; eine Verfahrensverbesserung durch Temperatursteigerung ist aber durch die konkurrierende Reaktion der Wasserstoffperoxid-Zersetzung, deren Geschwindigkeit mit steigender Temperatur ebenfalls zunimmt, begrenzt. In der Regel kann das Verfahren aber bereits bei normaler Raumtemperatur oder Außentemperatur, aber auch schon bei tieferen Temperaturen, mit guten Ergebnissen durchgeführt werden; dies ist z.B. bei einer Abwasserreinigung, die direkt in Kläranlagen durchgeführt werden soll, von besonderer Bedeutung.

Die Verweilzeit der mit dem erfindungsgemäß aktivierten Wasserstoffperoxid zu oxidierenden, d.h. in einen abbaubaren Zustand zu überführenden oder abzubauenden Substanzen wie z.B. von Abwässern, hängt außer von den übrigen Verfahrensparametern und vom Verwendungszweck, insbesondere auch vom angestrebten Oxidations-, Abbau- oder Reinigungsgrad und der Halbwertszeit der abzubauenden Substanzen ab. Die Halbwertszeit hängt ihrerseits wieder von der verwendeten Apparatur und den übrigen Verfahrensbedingungen ab. Zweckmäßigerweise werden die zu behandelnden Substanzen, z.B. zu reinigende Abwässer, im Reaktionsgefäß durch geeignete Einrichtungen, wie z.B. Rührer oder Pumpen, agitiert oder umgewälzt.

Als Elektroden (Kathoden, Anoden) zur Stromzuführung können im Prinzip alle Elektroden eingesetzt werden, die unter den Verfahrensbedingungen eine ausreichende Lebensdauer zeigen, d.h. insbesondere nicht in Lösung gehen. Erfindungsgemäß geeignete Elektroden oder Elektrodenmaterialien sind z.B. die in den folgenden Arbeiten beschriebenen:

A.T. Kuhn und P.M. Wright, Electrodes for Industrial Processes, in A.T. Kuhn, Industrial Electrochemical Processes, Else vier, London, 1971, Seiten 101, 118, 122, 233, 548 und 561; D. Pletscher, Industrial Electrochemistry, Chapman and Hall, London 1982, Seiten 63, 92, 115, 129, 133, 136, 162, 176, 181, 186 und 202; U. Landau et al, Electrochemistry in Industry, Plenum Press New York 1982, Seiten 19 - 28, 32, 183, 236, 276 und 374; D. Pletscher, J. Appl. Electrochem. 14 (1984) 403 - 415; M.M. Jaksic, Electrochem. Acta 29 (1984) 1539 - 1550; und S. Trasatti, Electrodes of Conductive Metallic Oxides Nr. 11 aus «Studies in Physical and Theoretical Chemistry», Part A (1980), Part B (1981), Else vier, London.

Erfindungsgemäß geeignete Kathoden sind vorzugsweise solche aus Edelstahl, Titan, Graphit, Kunstkohle, Nickel, sowie Ventilmetall-Kathoden, bei denen ein Ventilmetall, wie z.B. Titan, Zirkon oder Tantal, ganz oder teilweise mit einem Platinmetall beschichtet ist. Von den Edelmetall-Kathoden sind insbesondere diejenigen bevorzugt, bei denen das Edelmetall in nicht oxidierter Form vorliegt, weil ihre Lebensdauer unter den Verfahrensbedingungen besser ist als die von Kathoden, bei denen das Edelmetall in oxidierter Form vorliegt.

Erfindungsgemäß geeignete Anoden sollen eine ausreichende Stabilität gegenüber Oxidation, Passivierung und Korrosion zeigen; vorzugsweise werden Anoden aus Graphit eingesetzt und insbesondere dimensionsstabile Ventilmetall-Anoden (DSA) mit einer Beschichtung aus Platinmetalloxid, Spinellen oder anderen Oxiden.

Es ist zweckmäßig, die Elektroden so auszugestalten, daß ein möglichst guter Kontakt von Elektroden und Wasserstoffperoxid besteht; dies kann z.B. durch eine geeignete Formgebung oder die Verwendung spezieller Elektrodenoberflächen geschehen, wie z.B. durch Verwendung von Streckmetallen, Netzen, Lochblenden, Schüttungen von Elektrodenkörnern usw.

Es können zwei oder zweckmäßigerweise mehrere Elektroden, z.B. in Form eines Elektrodenpaketes, verwendet werden, und das Reaktionsgefäß (Elektrolysezelle) kann die für Elektrolysezellen übliche Ausgestaltung besitzen; Anoden- und Kathodenraum können auch durch ein Diaphragma getrennt sein. Zur Umwälzung der das Wasserstoffperoxid bzw. die zu oxidierenden Substanzen enthaltenden Lösungen, z.B. von Abwasser, kann es zweckmäßig sein, die Reaktionsgefäße mit geeigneten Rührvorrichtungen und/oder Pumpen auszurüsten. Die Schaltung der Elektrolysezellen kann monopolar oder multipolar sein. Es können auch die Wände des das Wasserstoffperoxid aufnehmenden Gefäßes als eine oder mehrere Elektroden ausgebildet sein.

Die Figuren 1 bis 3 zeigen Elektrodenanordnungen und Elektrolysezellen, wie sie z.B. für das erfindungsgemäße Verfahren verwendet werden können.

Die Figur 1 zeigt in schematischer perspektivischer Darstellung ein Elektrodenpaket mit Titanstreckmetall-Kathoden (6 x 100 cm$^2$) (1) und Streckmetall-Anoden (5 x 100 cm$^2$) (2), die mit einem stabförmigen Abstandhalter (3) aus PVC (Durchmesser 0,3 bis 0,4 cm) verbunden sind.

Die Fig. 2 zeigt in Seitenansicht (a) und Draufsicht (b) eine Elektrolysezelle aus einem Becherglas von 1 l Inhalt, in das das Elektrodenpaket der Fig. 1 eintaucht, und die am Boden mit einem Magnetrührer (4) versehen ist.

Die Fig. 3 zeigt die Seitenansicht einer weiteren Ausgestaltung einer Elektrolysezelle der in Fig. 2 beschriebenen Art, die zusätzlich zum Magnetrührer (4) noch zwei Pumpen (5) enthält. Bei den Pumpen handelt es sich um Schlauchpumpen mit Pumpe, Pumpenkopf, Getriebe (Heidolph Type RGL 85) und Steuergerät (Heidolph Type ST 1).

Ein Vorteil des erfindungsgemäßen Verfahrens ist es auch, daß weder Metallkationen erforderlich sind, noch solche Metallkationen, wenn sie in der Reaktionsmischung vorhanden sind, stören.

Mit dem erfindungsgemäßen Verfahren ist es möglich, hochbelastete, toxische Abwässer vollständig abzubauen; aus wirtschaftlichen Gründen wird aber der Abbau vorzugsweise nur bis zur biologisch abbaubaren Stufe durchgeführt.

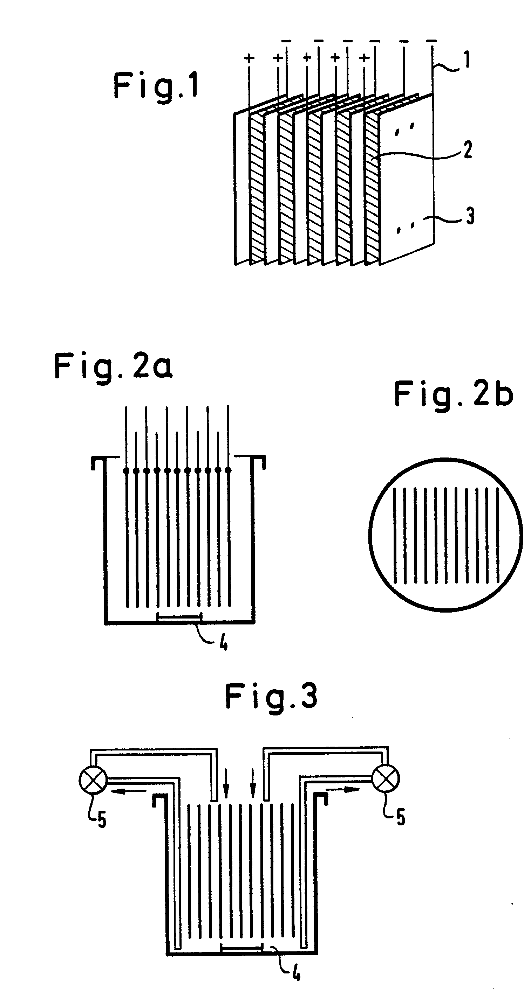

Die nachstehenden Beispiele erläutern die Erfindung näher, ohne sie darauf zu beschränken. Wenn nicht anders angegeben, beziehen sich Prozentangaben und Teile auf das Gewicht, Temperaturangaben auf die Celsius-Skala. Die Oxidationsbehandlung mit dem erfindungsgemäß aktivierten Wasserstoffperoxid erfolgte in den Beispielen in Elektrolysezellen, die im Aufbau den in Fig. 2 und 3 dargestellten Zellen entsprechen.

Beispiele

Beispiel 1

Ausgangsprodukt war ein Deponiesickerwasser mit einer Leitfähigkeit von 12 mS und einem CSB-Gehalt von 11 800 mg/l; pH-Wert = 4. Die Zugabe von Wasserstoffperoxid erfolgte während einer Stunde. Konzentration: 23 000 mg $H_2O_2$/l, Stromdichte 40 mA/cm$^2$, Zimmertemperatur, Elektrodenfläche 500 cm$^2$/l. Das Elektrodenpaket bestand aus 5 Kathoden aus Edelstahl (V 2 A) und 4 Anoden aus thermisch platiniertem Titan.

Der Abbau erfolgte mit einer Halbwertszeit von 2 Stunden während einer Gesamtzeit von 8,5 Stunden. Am Ende der Umsetzung betrug der CSB-Gehalt 200 mg/l.

Beispiel 2

Es wurde, ausgehend von dem Deponiesickerwasser von Beispiel 1, unter den im Beispiel 1 angegebenen Bedingungen gearbeitet. Der Wasserstoffperoxid-Zusatz erfolgte während einer Stunde; Wasserstoffperoxid-Konzentration: 12 000 mg/l. Halbwertszeit 0,8 Stunden; Gesamtzeit der Behandlung: 4 Stunden. Abbau zu einem CSB-Wert von 5 200 mg/l.

Beispiel 3

Ausgangsmaterial war ein pyridinhaltiges Rohwasser (Pyridingehalt 20 mg/l) mit einer Leifähigkeit von 0,5 mS, einem Gehalt an Natriumphosphat von 1,4 mg/l und einem pH-Wert von 1,5. Es wurden die in Beispiel 1 beschriebenen Elektroden verwendet. Die Stromdichte betrug 30 mA/cm$^2$. Die Halbwertszeit betrug 28 Minuten; die Gesamtdauer des Abbaus betrug 160 Minuten.

Beispiel 4

Ausgangsprodukt war eine wäßrige, 0,01 M Natriumsulfat und 100 mg/l Phenol enthaltende Lösung vom pH-Wert = 7.

Es wurde mit den in Beispiel 1 beschriebenen Elektroden gearbeitet; Stromdichte 15 mA/cm$^2$. Die Wasserstoffperoxid-Zugabe erfolgte im Molverhältnis 2:1, bezogen auf Phenol. Die Halbwertszeit betrug 17,5 Minuten, die Gesamtdauer des Abbaus 90 Minuten.

Beispiel 5

Es wurde mit einem Elektrolyten gearbeitet, der 1,4 g Natriumsulfat/l enthielt, und als Modellsubstanz p-Chlorbenzol, Pentachlorphenol und andere toxische Halogenverbindungen in einer Menge von 10 mg/l enthielt. Die Stromdichte betrug 2,0 mA/cm$^2$. Es wurde mit den in Beispiel 1 beschriebenen Bedingungen und Elektroden gearbeitet. Die Halbwertszeit betrug 6 Minuten, die Gesamtzeit des Abbaus 80 Minuten.

Patentansprüche

1. Verfahren zur Überführung von schwer abbaubaren oder toxischen Substanzen in wäßrigen Medien mittels $H_2O_2$ in biologisch abgebaute bzw. abbaubare Substanzen, dadurch gekennzeichnet, daß man das wäßrige Medium mit 0,5 bis 10 mg $H_2O_2$/l pro CSB-Einheit versetzt und einem Gleichstrom mit einer Stromdichte von 0,5 bis 50 mA/cm$^2$ aussetzt unter Anwendung von Elektroden, die unter den Verfahrensbedingungen nicht in Lösung gehen.

2. Verfahren nach Anspruch 1, dadurch gekennzeichnet, daß man bei einem pH-Wert von 0 bis 14, insbesondere bis pH < 8 arbeitet.

3. Verfahren nach Anspruch 1 oder 2, dadurch gekennzeichnet, daß man eine Stromdichte von 10 bis 30 mA/cm$^2$ verwendet.

4. Verfahren nach einem der vorhergehenden Ansprüche, dadurch gekennzeichnet, daß man als Kathodenmaterial Edelstahl, Titan, Nickel, Graphit, Kunstkohle oder ganz oder teilweise mit einem Platinmetall beschichtete Ventilmetalle verwendet.

5. Verfahren nach einem der vorhergehenden Ansprüche, dadurch gekennzeichnet, daß man als Anoden Graphitanoden oder dimensionsstabile Ventilmetallanoden (DSA) einsetzt.

6. Verfahren nach einem der vorhergehenden Ansprüche, dadurch gekennzeichnet, daß das Wasserstoffperoxid kontinuierlich zugegeben wird unter gleichzeitiger Zuführung von Gleichstrom.

7. Verfahren nach einem der vorhergehenden Ansprüche, dadurch gekennzeichnet, daß das die zu behandelnden Substanzen enthaltende wäßrige Medium Abwasser ist.

8. Verfahren nach einem der vorhergehenden Ansprüche, dadurch gekennzeichnet, daß man 2 bis 3 mg Wasserstoffperoxid/Liter pro CSB-Einheit einsetzt.

## Claims

1. Process for the conversion of difficultly degradable or toxic substances in aqueous media by means of hydrogen peroxide into biologically degraded or degradable substances, characterised in that one mixes the aqueous medium with 0.5 to 10 mg $H_2O_2$/l per COD unit and subjects to a direct current with a current density of 0.5 to 50 mA/cm$^2$ with the use of electrodes which do not go into solution under the process conditions.

2. Process according to claim 1, characterised in that one works at a pH value of 0 to 14, especially to pH < 8.

3. Process according to claim 1 or 2, characterised in that one uses a current density of 10 to 30 mA/cm$^2$.

4. Process according to one of the preceding claims, characterised in that one uses high grade steel, titanium, nickel, graphite, synthetic carbon or valve metals coated wholly or partially with a platinum metal as cathode material.

5. Process according to one of the preceding claims, characterised in that one uses graphite anodes or dimensionally stable valve metal anodes (DSA) as anodes.

6. Process according to one of the preceding claims, characterised in that the hydrogen peroxide is added continuously, with the simultaneous supply of direct current.

7. Process according to one of the preceding claims, characterised in that aqueous medium containing the substances to be treated is effluent.

8. Process according to one of the preceding claims, characterised in that one uses 2 to 3 mg hydrogen peroxide/litre per COD unit.

## Revendications

1. Procédé pour la transformation de substances difficilement dégradables ou toxiques dans des milieux aqueux au moyen de $H_2O_2$ en substances biologiquement dégradées ou dégradables, caractérisé en ce qu'on additionne le milieu aqueux de 0,5 à 10 mg de $H_2O_2$/l par unité de DCO et en ce qu'on le soumet à un courant continu avec une densité de courant de 0,5 à 50 mA/cm$^2$ en utilisant des électrodes qui ne passent pas en solution dans les conditions opératoires.

2. Procédé suivant la revendication 1, caractérisé en ce qu'on opère à un pH de 0 à 14, en particulier jusqu'à un pH inférieur à 8.

3. Procédé suivant la revendication 1 ou 2, caractérisé en ce qu'on utilise une densité de courant de 10 à 30 mA/cm$^2$.

4. Procédé suivant l'une des revendications précédentes, caractérisé en ce qu'on utilise comme matière de cathode un acier spécial, le titane, le nickel, le graphite, le charbon artificiel ou des métaux pour soupapes revêtus en tout ou partie de platine métallique.

5. Procédé suivant l'une des revendications précédentes, caractérisé en ce qu'on utilise comme anodes, des anodes de graphite ou des anodes de métaux pour soupapes stables dimensionnellement (DSA).

6. Procédé suivant l'une des revendications précédentes, caractérisé en ce qu'on ajoute le peroxyde d'hydrogène en continu avec envoi simultané de courant continu.

7. Procédé suivant l'une des revendications précédentes, caractérisé en ce que le milieu aqueux contenant les substances à traiter est une eau résiduaire.

8. Procédé suivant l'une des revendications précédentes, caractérisé en ce qu'on utilise 2 à 3 mg de peroxyde d'hydrogène/litre par unité de DCO.

Fig.1

Fig.2a

Fig.2b

Fig.3